# Europäisches Patentamt

## European Patent Office
## Office européen des brevets

(11) Publication number: **0 072 076**
**B1**

(12) **EUROPEAN PATENT SPECIFICATION**

(45) Date of publication of patent specification: **13.11.85**

(21) Application number: **82200991.6**

(22) Date of filing: **05.08.82**

(51) Int. Cl.⁴: **C 08 F 10/00,** C 08 F 4/62, C 08 F 4/70

(54) Process of preparing a polymerization catalyst and preparation of ethylene polymers with this catalyst.

(30) Priority: **06.08.81 NL 8103703**

(43) Date of publication of application:
**16.02.83 Bulletin 83/07**

(45) Publication of the grant of the patent:
**13.11.85 Bulletin 85/46**

(84) Designated Contracting States:
**AT BE DE FR GB IT NL SE**

(56) References cited:
**EP-A-0 018 108**
**FR-A-1 228 486**
**GB-A-1 429 174**
**GB-A-1 575 352**

(73) Proprietor: **STAMICARBON B.V.**
**Postbus 10**
**NL-6160 MC Geleen (NL)**

(72) Inventor: **van de Leemput, Lambertus J. M. A.**
**Imkerstraat 16**
**NL-6101 GW Echt (NL)**
Inventor: **Nooijen, Godefridus Arnoldus H.**
**Gouv. Houbenstraat 16**
**NL-5981 BL Helden-Panningen (NL)**

(74) Representative: **De Boer, Jan et al**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a process of preparing a chromium-containing catalyst for the polymerization of olefins, by applying to an inert inorganic support a complex of a chromium compound with one or more organometallic compounds of a metal of group II or III of the periodic system in which 1—20 carbon atoms are bonded to this metal.

The invention relates also to the polymerization with such a catalyst of a 1-alkene with 2—8 carbon atoms, in particular ethylene, whether or not together with at most 15 mole % of one or more other 1-alkenes with 2—15 carbon atoms.

Such processes are known from Dutch Patent Application No. 7605535, or are described in the non-prepublished Dutch Patent Application No. 8006167.

Polymerizations of olefins, in particular ethylene, according to these known processes, carried out as 'solution process', as 'suspension process' or as 'gas-phase polymerization' yield polymers of relatively high density. However, the polymers obtained with these known chromium-containing catalysts have generally been found to exhibit a relatively wide molecular weight distribution.

For certain applications it is desirable to obtain polymers of high density with a narrowest possible, rather than wide, molecular weight distribution.

This is notably the case for applications such as injection moulding of polyethylene.

It has not been found that a chromium-containing catalyst which can yield polymers of narrower molecular weight distribution can be obtained by applying to an inert inorganic support, in particular silica, a complex of a chromium compound with one or more organometallic compounds of a metal of group II or III of the periodic system in which hydrocarbyl groups with 1—20 carbon atoms are bonded to this metal, if in addition a nickel, molybdenum and/or titanium compound or complex is/are deposited on the inert support.

From US Patent Specification 3,951,933 and from the Soviet Patent Specifications Nos. 269,151 and 433,172 it is known to add nickel oxide to chromium-oxide-containing catalysts, either to prevent the formation of unsaturation in the polymers or copolymers obtained or to obtain polymers of lower density by dimerization of the monomer.

Surprisingly, with the catalysts of the present invention it has now been found to be much easier to control the distribution of the molecular weight of the polymer obtained than with the known catalysts, and more in particular it has been found to be possible to obtain polymers of high density and narrow molecular weight distribution.

The chromium compound is converted with organometallic compounds of Group II or III elements of the periodic system, such as beryllium, magnesium, boron, aluminium and gallium. The hydrocarbyl groups in these compounds are preferably alkyl groups with 1—20 carbon atoms.

Suitable chromium compounds are, for example, 1,3-diketo compounds such as chromium(III) acetyl acetonate, or chromium salts of mineral acids as e.g. chromium halides and particularly chromium chlorides or of saturated or unsaturated aliphatic carboxylic acids such as propanoic acid, hexanoic acid, octanoic acid, decanoic acid, lauric acid, myristic acid, palmitic acid, stearic acid, arachic acid, oleic acid, erucic acid, pelargonic acid, linoleic and linolenic acid.

Suitable organometallic compounds are in particular aluminium trialkyls and the magnesium dialkyls. The alkyl groups in the magnesium dialkyls preferably contain 2—12 carbons atoms, and in particular 4—8 carbon atoms. Suitable organomagnesium compounds are diethyl magnesium, dipropyl magnesium, diisopropyl magnesium, ethylbutyl magnesium, dibutyl- or diisobutyl magnesium, diamyl magnesium, dihexyl magnesium, dioctyl magnesium, didecyl magnesium, didodecyl magnesium but also dicycloalkyl magneisum with identical or different cycloalkyl groups with 3—12 carbon atoms and preferably 5 or 6 carbon atoms. Also an alkyl and a cycloalkyl group may be bonded to magnesium. Although alkyl or cycloalkyl magnesium compounds are preferred, magnesium aryls may also be used, in particular diphenyl magnesium, but also ditolyl- and dixylyl magnesium. The diaryl magnesium compounds are insoluble, or poorly soluble, in aliphatic hydrocarbons and, for that reason, are dissolved in aromatic hydrocarbons. The organomagnesium compounds may be prepared in a known manner (see e.g. Organometallic Compounds; Vol. 1; G. E. Coates; M. L. H. Green and K. Wade; Organometallverbindungen; F. Runge). In particular, use is made of solutions of magnesium alkyls prepared according to the process described in Dutch Patent No. 139,981.

Suitable aluminium compounds are aluminium trialkyls and organoaluminium compounds having the general formula $(R_4)_2AH$, where $R_4$ denotes an alkyl group with 1—10 carbon atoms. Aluminium compounds containing one or more radicals derived from a diene, as known from, for example, German Auslegeschriften Nos. 1,956,353; 1,183,084; 1,136,113 and 1,186,633, may also be used.

The chromium compounds are reacted with an organomagnesium or organoaluminium compound or an organometallic compound of another metal of group II or III in a solvent which is inert relative to these compounds. By preference, this reaction is carried out in a hydrocarbon solvent, in particular in one or more linear or branched aliphatic hydrocarbons such as butane, pentane, hexane, heptane, octane, decane, or the branched isomers, or in a low-boiling gasoline consisting mainly of hexanes and/or heptanes, or a higher-boiling gasoline.

Also higher linear or branched saturated aliphatic hydrocarbons or mixtures thereof can be used as a solvent. Although the chromium compounds dissolve more readily in aromatic hydrocarbons than in aliphatic hydrocarbons, and can be reacted with magnesium diaryls that are soluble in aromatic hydrocarbons, there is a general tendency not to use aromatic hydrocarbon solvents if adequate modes of realization of the process in aliphatic and/or cycloaliphatic solvents are available, in view of the cost of aromatic hydrocarbon solvents and also because of the possible dangers to health.

Most chromium compounds will in part be dispersed on account of their los solubility in aliphatic and/or cycloaliphatic hydrocarbons. However, upon addition of an organomagnesium or organoaluminium compound, these compounds will at least in part dissolve. Dissolution is promoted by gentle heating, e.g. at 40—100°C or, if low-boiling solvents are used, to the boiling point of the solvent (under pressure, if desired). The compounds slightly colour the hydrocarbon solvent because a small part of them dissolves. Addition of the organomagnesium or organoaluminium compound yields dark-coloured solutions.

The molar ratio of the organometallic compounds concerned to the chromium compounds used, expressed as atomic ratio of the metal of group II or III to the chromium, is chosen between 0.5:1 and 20:1, preferably between 1:1 and 9:1.

In order to bring the nickel, molybdenum and/or titanium compound into solution, the compound can be complexed with organometallic compounds in the way described above for the chromium compounds, or use can be made of compounds which are as such soluble in the solvent used for depositing the compound on the inert support.

Suitable complexable nickel, molybdenum and titanium compounds are 1,3-diketo compounds such as nickel(II) acetyl acetonate, molybdenyl acetyl acetonate, titanium isopropoxyacetyl acetonate, or they are nickel, molybdenum and nickel salts of mineral acids or saturated or unsaturated aliphatic carboxylic acids.

Suitable nickel, molybdenum and titanium compounds soluble in the preferred solvents are, for example, nickel di-2-ethylhexanoate and tetrabutoxytitanium.

Besides the compounds of chromium and nickel, molybdenum and/or titanium, which are essential for the catalyst of the invention, also other transition metals can be applied to the inert support, as complexes or compounds soluble in the solvents used.

The solutions of the chromium complex, of the nickel, molybdenum and/or titanium compound or complex, and of the optional compounds or complexes of other transition metals can be combined with the inert support separately, in any desired sequence, or jointly.

If a nickel, molybdenum and/or titanium complex, and/or complexes of other transition metals are used, they can also be prepared together with the chromium complex, if desired.

The chromium, nickel, molybdenum and/or titanium solutions are combined with the inert support by, for example, adding the solution slowly and with stirring to a support suspended in the solvent. The complexes and compounds can be deposited on the support by evaporation, insofar as they do not already deposit wholly or in part from the solution onto the support. When the complexes and compounds deposit on the support from the solution, this is clearly perceptible because the solution loses all or part of its colour and the support is coloured.

The inert inorganic support is preferably an oxide, such as silica, alumina, mixed alumina-silica, zirconium oxide, thorium oxide, magnesium oxide. Among these oxides, silica, alumina and mixed silica-alumina are preferred, and silica is most preferred. Silica is known, and can be used, in many different forms. Particularly suitable are silica xerogels with large pore volumes.

If desired, during or after preparation the silica can in a known manner be provided with other components, such as, for example, fluorine. Further, compounds can be applied during or after the activation of the catalyst.

The support is dried, insofar as this is necessary, for example by heating in dry air, before the transition metals are deposited on it. Drying should be affected in such a way that the support is preferably free of physically bound water.

The amount of chromium, nickel, molybdenum and/or titanium, and optional other transition metals applied to the support may vary within wide limits but will generally be in the range of 0.01—10% by wt. of transition metal on support.

The molar ratio of the chromium applied to the inert support to the other transition metals applied to the support may vary within wide limits. Generally, the ratio chromium: other transition metals will be chosen between 1:50 and 50:1. Preferably, the ratio chromium: other transition metals is chosen between 1:20 and 20:1.

After the chromium complex, the nickel, molybdenum and/or titanium compound or complex and the optional compounds or complexes of other transition metals have been combined with the support, support and metal compounds are separated from the solvent by filtration or evaporation. If the complexes and/or compounds of the transition metals are not deposited on the support to a considerable extent, in which case the solvent will retain all or substantially all of its colour, the solvent will be evaporated.

The support with the transition metals deposited on it can next be activated by heating it at a temperature of 200—1200°C in a non-reducing atmosphere, such as oxygen, air, nitrogen, carbon dioxide or a noble gas.

Preferably, this heating step is undertaken in an oxidizing atmosphere, such as, for example, oxygen, oxygen-containing gases or air, also air of reduced or increased oxygen content forming an oxidizing atmosphere, or course, and being usable.

Preferably, the supported metal compounds are heated at 400—1200°C, more in particular at 500—1100°C.

The heating times may vary in duration from a few seconds to tens of hours or more. At temperatures of 500—1100°C, the heating time may generally be 30 minutes to 8 hours.

The optimum heating period can easily be determined experimentally by one skilled in the art, by preparing catalysts of identical composition under conditions which are identical except for the heating periods, which are varied at a given heating temperature, and by subsequently determining the polymerization properties of the ultimate catalyst.

By preference, after cooling to ambient temperature the catalyst is brought into a hydrocarbon solvent, which is preferably the polymerization medium. Solvents can be aliphatic or cyclic hydrocarbons, such as butane, isobutane, normal or branched pentanes, hexanes, heptanes, octanes and higher linear and/or branched saturated aliphatic hydro-carbons, cyclopentane, cyclohexane, cyclo-heptane, cyclooctane etc. and mixtures, in particular fractions obtained directly or indirectly from mineral oil, such as low-boiling gasoline, kerosine or gas oil, which indeed contain aromatics but predominantly consist of aliphatics and/or cycloaliphatics. Aromatic hydrocarbons, such as benzene, toluene, xylenes or halogenated hydrocarbons can also be used, but for practical reasons, viz. on account of cost and health risks, it will generally be preferred to use aliphatic hydrocarbons or mineral oil fractions which contain little or no aromatics.

To the supported catalyst dispersed in an inert dispersant, an organometallic compound of an element of group II or III of the periodic system, such as beryllium, magnesium, boron, aluminium or gallium, may be added. The molar ratio of the organometallic compound of the transition metals applied to the support can then vary within wide limits, for example between 0.1:1 and 200:1. Preferably, the ratios lie betewen 1:1 and 40:1.

To what extent the addition of such organometallic compounds is desirable depends on the polymerization conditions and on the polymer desired. At low catalyst concentrations and at relatively low monomer concentrations in the dispersant, the polymerization can often be started and sustained if such organometallic compounds are added. The contaminants level in monomer and dispersant also plays a role. By experiment it can easily be determined whether the addition of said organometallic compounds is desirable. By addition of organometallic compounds it is also possible to modify the properties of the polyethylene to be prepared.

The suspension polymerizations with the catalysts of the invention are generally carried out at temperatures of at most 100°C. In some volatile solvents, such as, for example, isobutane, the suspension polymerization can be carried out at even slightly higher temperatures, to about 110°C. Preferably, however, polymerization is carried out at temperatures of at most 105°C. The polymerization can be carried out at about 50°C, but preferably temperatures of at least 70°C, more in particular 85°C or higher, are chosen.

Ethylene polymerizations with the catalysts of the invention can be carried out also at temperatures above 120°C, for example 150—200°C. A solution of ethylene polymer in the solvent is then obtained, which can be worked up in any known manner. The polymerization can also be carried out as a so-called gas-phase polymerization, realizations of which are known from, for example, UK Patent Specification No. 1,373,982. When ethylene is copolymerized with at most 15 mole % of one or more alkenes with 3—15 carbon atoms, it has to be taken into account that the polymerization rate of ethylene is higher than that of the comonomers. In order to copolymerize ethylene with a particular mole percentage of comonomer, more, sometimes even considerably more of that comonomer will have to be present in the reaction mixture. One of ordinary skill in the art is familiar with this and will not have much trouble in determining the proportions in the reaction mixture required in order to achieve a particular monomer content in the copolymer.

The polymerization can be carried out at atmospheric pressure, but also at elevated pressure. If low-boiling dispersants are used, such as butane, isobutane, pentane, the pressure in the reactor will have to be more than atmospheric. The monomer pressure can be atmospheric, but is preferably higher. By carrying out the polymerization at elevated monomer pressure, higher yields can be obtained, so that elevated pressures up to, for example 10 MPa will normally be used. Higher pressures, even up to 200 MPa or more, ure possible but are not usually employed on account of practical considerations.

Preferably, polymerization is carried out at pressures between 600 and 8000 kPa, more in particular between 1200 and 5000 kPa. The pressure to be chosen will in part depend on the polymerization temperature and the volatility of the dispersant.

The monomer pressure will be determined, in part, by balancing, on the one hand, the cost and safety aspects of an installation for relatively high pressures, as compared with the cost and safety aspects of an installation for relatively low pressures, against, on the other hand, the polyethylene productivity at high and low pressures respectively. The factors determining the final choice of monomer pressure are mainly economic.

The quantity of catalyst is generally so chosen that the dispersant contains 0.001—10 mmoles of transition metals per litre of dispersant, and preferably 0.001—1 mmoles/l.

The process lends itself to known modifications. For example, the molecular weight may be controlled not only through the temperature but also by addition of hydrogen or other modifying agents commonly used to this end.

The invention will be further explained by the following examples but is not restricted to them.

Example 1
Preparation of chromium/nickel catalyst:
A. Preparation of Ni(acac)$_2$/TIBA complex

In a thoroughly dried 250 ml flask provided with a stirrer, a dropping funnel and a reflux cooler, 10 g nickel(II) acetyl acetonate is suspended in 100 ml dry gasoline, under an atmosphere of dry nitrogen. This suspension is heated to the boiling point, with stirring, whereupon 88.2 ml of a 3.97 molar solution of triisobutylaluminium (TIBA) is added dropwise. A strongly exothermic reaction takes place, during which formation of gas is observed. The reaction is continued for 1 hour at reflux temperature. The complex-solution obtained is dark brown in colour and contains only traces of precipitate. Before being processed further, the solution is first filtered off.

B. Preparation of Cr(acac)$_3$/TIBA-complex

In the same way as in 1A, a complex of Cr(acac)$_3$ and TIBA is made, starting from 15 g Cr(acac)$_3$ suspended in 50 ml dry gasoline and 31.5 ml of a 3.97 M TIBA solution.

C. Application of the chromium(III) acetyl acetonate/TIBA and nickel(II) acetyl acetonate/TIBA complexes to the silica support

24 g silica support is predried for 4 hours at 200°C, dry air being passed through. After the air had been replaced by nitrogen, the silica support is suspended in approx. 100 ml dry gasoline in a 250 ml flask. To this suspension, a mixture of 6.40 ml of the solution of the Ni(acac)$_2$/TIBA complex obtained and filtered off according to 1A and 2.05 ml of the solution of the Cr(acac)$_3$/TIBA complex prepared and filtered off according to 1b are added dropwise, at room temperature and with vigorous stirring. Stirring is continued for 1 hour. The gasoline is removed by evaporation. The catalyst thus prepared is activated by heating for 8 hours at 900°C, dry air being passed into it.

Example 2
A. Preparation of MoO$_2$(acac)$_2$/TIBA complex

In the same way as in 1A, a complex of MoO$_2$(acac)$_2$ and TIBA is made, starting from 12.94 g MoO$_2$(acac)$_2$ suspended in 100 ml dry gasoline and 60 ml 3.97 M TIBA.

B. Application of the chromium(III) acetyl acetonate/TIBA complex and molybdenyl(VI) acetyl acetonate/TIBA complexes to the silica support

25.1 g silica support is predried for 4 hours at 200°C, dry air being passed into it. After the air has been replaced by nitrogen, the silica support is suspended in 150 ml dry gasoline in a 250 ml flask. At room temperature and with vigorous stirring, a mixture of 1.05 ml of the solution of the MoO$_2$(acac)$_2$/TIBA complex prepared and filtered off according to 2A and 3.70 ml of the solution of the Cr(acac)$_3$/TIBA complex prepared and filtered off according to 1B are added to this suspension dropwise. Stirring is continued for 1 hour. The gasoline is removed by evaporation. The catalyst thus prepared is actuated by heating for 8 hours at 900°C, dry air being passed into it.

Example 3
A. Preparation of TiO(acac)$_2$/DBM complex

In the same was as in 1A, a complex of TiO(acac)$_2$ and dibutyl magnesium (containing 10% TEA) is made, starting from 3.275 g TiO(acac)$_2$ suspended in 50 ml dry gasoline and 107 ml 0.35 M DBM.

B. Preparation of Cr(acac)$_3$/DBM complex

In the same way as in 1A, a complex of Cr(acac)$_3$ and dibutyl magnesium (containing 10% TEA) is made, starting from 0.67 g Cr(acac)$_3$ suspended in 50 ml dry gasoline and 33.0 ml 0.35 M DBM.

C. Application of the chromium(III) acetyl acetonate/DBM and titanyl acetyl acetonate/DBM complexes to the silica support

20 g silica support is predried for 4 hours at 200°C, dry air being passed through. After the air has been replaced by nitrogen, the silica support is suspended in approx. 100 ml dry gasoline in a 1 litre flask. At room temperature and with vigorous stirring, the solution of the Cr(acac)$_3$/DBM complex prepared according to 3B, and next the solution of the TiO(acac)$_2$/DBM complex prepared according to 3A, are added to this suspension dropwise. Stirring is continued for 1 hour. The gasoline is removed by evaporation. The catalyst thus prepared is activated by heating for 8 hours at 750°C, dry aire being passed into it.

Example 4
Polymerization with a chromium/nickel catalyst

Into a stirred autoclave (3.2 litres), 1500 ml dry gasoline is introduced, to which 100 mg of the catalyst prepared in Example 1C is subsequently added. Next, 0.4 ml of a 0.5 M trioctyl aluminium (TOA) solution in gasoline is added, whereupon the reactor is closed and pressurized with ethylene with 10 vol. % of hydrogen. The contents of the autoclave are heated to 88°C, and polymerization is carried out for 90 minutes at a total pressure of 6 atm. The polyethylene yield is 250 grams per gram of catalyst.

The molecular weight distribution of the polymer obtained is given by the value

$$M_w^*/M_n^* = 15.9$$

## Example 5
### Polymerization with a chromium/molybdenum catalyst

In the same way as described in Example 4, ethylene is polymerized with the catalyst prepared in Example 2B, 25 vol. % hydrogen being present this time.

The polyethylene yield is 910 grams per gram of catalyst.

The molecular weight distribution is given by the value

$$M_w^*/M_n^* = 12.8$$

## Comparative test with a known chromium catalyst

In the same way as described in Example 4, ethylene is polymerized with a chromium catalyst prepared in a known manner by impregnation of a silica support with a $Cr(acac)_3$/TIBA complex.

The polyethylene yield is 1870 grams per gram of catalyst.

The molecular weight distribution is given by the value

$$M_w^*/M_n^* = 20.0$$

## Example 6
### Polymerization with a chromium/titanium catalyst

Into a stirred autoclave (5 litres), 1,2 kg dry isobutane is introduced. After the contents of the reactor have been brought to a temperature of 98°C, ethylene is forced in to a total reactor pressure of 25 bar. Next, triethyl boron (TEB) is added, so that the boron content in the polymerization medium is 2 ppm. Finally, 460 mg of the catalyst described in Example 3C is added. Polymerization is carried out for 60 minutes, during which the total pressure in the reactor is kept constant by forcing in ethylene. The temperature of the contents of the reaction vessel is maintained at 98°C during the polymerization. The polyethylene yield is 1730 grams per gram of catalyst.

The molecular weight distribution is given by the value

$$M_w/M_n = 15.4$$

## Comparative test with a known chromium catalyst

In the same way as described in Example 6, ethylene is polymerized for 120 minutes at 102°C, at a total reactor pressure of 27 bar, with 550 mg of a chromium catalyst prepared in a known manner by impregnating a silica support with a $Cr(acac)_3$/TIBA complex. The polyethylene yield is 1610 grams per gram of catalyst.

The molecular weight distribution is given by the value

$$M_w/M_n = 18.5$$

## Claims

1. Process of preparing a chromium-containing catalyst for the polymerization of olefins by applying to an inert inorganic support, in particular silica, a complex of a chromium compound with one or more organometallic compounds of a metal of group II or III of the periodic system in which hydrocarbyl groups with 1—20 carbon atoms are bonded to this metal, the process being characterized in that besides the chromium complex also a nickel, molybdenum and/or titanium compound or complex is/are deposited on the inert support.

2. Process according to claim 1, characterized in that said nickel, molybdenum and/or titanium compound or complex is deposited on the inert support together with the chromium complex from a solution thereof.

3. Process according to claim 1, characterized in that said nickel, molybdenum and/or titanium compound or complex is deposited on the inert support separately, before or after the deposition of the chromium complex, from a solution of said compound or complex.

4. Process according to claims 1—3, characterized in that use is made of a complex of nickel, molybdenum and/or titanium compound with one or more organometallic compounds of a metal of group II or III of the periodic system in which hydrocarbyl groups with 1—20 carbon atoms are bonded to this metal.

5. Process according to claim 4, characterized in that the nickel, molybdenum and/or titanium compound is/are reacted with 0.5—20 moles of organometallic compound of a metal of group II or III of the periodic system per mole of nickel or molybdenum.

6. Process according to claims 2 and 4, characterized in that the chromium compound and nickel, molybdenum and/or titanium compound are reacted with 0.5—20 moles of organometallic compound of a metal of group II or III of the periodic system per mole of chromium+nickel, molybdenum and/or titanium.

7. Process according to claims 1—3, characterized in that a nickel, molybdenum and/or titanium compound is/are used which is/are soluble in an organic solvent which is inert with respect to the support.

8. Process according to claims 1—7, characterized in that the molar ratio of the chromium to the other transition metals is 1:50 to 50:1.

9. Process according to claim 8, characterized in that the molar ratio of the chromium to the other transition metals is 1:10 to 20:1.

10. Process according to claims 1—9, characterized in that the catalyst component obtained is heated at a temperature of 200—1200°C in a non-reducing atmosphere.

11. Catalyst obtained according to the process of any one of the claims 1—10.

12. Process for the polymerization of a 1-alkene with 2—8 carbon atoms, whether or not together with minor amounts of at most 15 mole % of one or more other 1-alkenes with 2—15 carbon atoms, preferably ethylene, if desired with at most 10 mole % of olefins with 3—8 carbon atoms, in the presence of a catalyst obtained by applying to an inert inorganic support, in particular silica, a complex of a chromium compound with one or more organometallic compounds of a metal of group II or III of the periodic system in which hydrocarbyl groups with 1—20 carbon atoms are bonded to this metal, the process being characterized in that the catalyst according to claim 11 is used.

13. Process according to claim 12, characterized in that the polymerization is carried out also in the presence of an organometallic compound of a metal of group II or III of the periodic system.

14. Process according to claim 13, characterized in that a trialkyl boron is used as organometallic compound.

## Revendications

1. Procédé de préparation d'un catalyseur contenant du chrome pour la polymérisation d'oléfines en appliquant à un support minéral inerte, en particulier de silice, un complexe d'un composé de chrome avec un ou plusieurs composés organo-métalliques d'un métal du Groupe II ou III de la Classification Périodique, dans lesquels des groupes hydrocarbyle de 1 à 20 atomes de carbone sont liés à ce métal, le procédé étant caractérisé en ce qu'outre le complexe de chrome, on dépose également un composé ou complexe de nickel, molybdène et/ou titane sur le support inerte.

2. Procédé selon la revendication 1, caractérisé en ce qu'on dépose ledit composé ou complexe de nickel, molybdène et/ou titane sur le support inerte ensemble avec le complexe de chrome à partir d'une solution de ceux-ci.

3. Procédé selon la revendication 1, caractérisé en ce qu'on dépose ledit composé ou complexe de nickel, molybdène et/ou titane sur le support inerte séparément, avant ou après le dépôt du complexe de chrome, à partir d'une solution dudit composé ou complexe.

4. Procédé selon les revendications 1 à 3, caractérisé en ce qu'on utilise un complexe d'un composé de nickel, molybdène et/our titane avec un ou plusieurs composés organo-métalliques d'un métal du Groupe II ou III de la Classification Périodique dans lesquels des groupes hydrocarbyle de 1 à 20 atomes de carbone sont liés à ce métal.

5. Procécé selon la revendication 4, caractérisé en ce qu'on fait réagir le composé de nickel, molybdène et/ou titane avec 0,5 à 20 moles d'un composé organométallique d'un métal du Groupe II ou III de la Classification Périodique par mole de nickel ou de molybdène.

6. Procédé selon le revendications 2 et 4, caractérisé en ce qu'on fait réagir le composé de chrome et le composé de nickel, molybdène et/ou titane avec 0,5 à 20 moles du composé organométallique d'un métal du Groupe II ou III de la Classification Périodique par mole de chrome+nickel, molybdène et/ou titane.

7. Procédé selon les revendications 1 à 3, caractérisé en ce qu'on utilise un composé de nickel, molybdène et/ou titane qui est soluble dans un solvant organique inerte vis-à-vis du support.

8. Procédé selon les revendications 1 à 7, caractérisé en ce que le rapport molaire du chrome aux autres métaux de transition est de 1:50 à 50:1.

9. Procédé selon la revendication 8, caractérisé en ce que le rapport molaire du chrome aux autres métaux de transition est de 1:10 à 20:1.

10. Procédé selon les revendications 1 à 9, caractérisé en ce qu'on chauffe le composant catalytique obtenu à une température de 200 à 1200°C en atmosphère non réductrice.

11. Catalyseur obtenu par le procédé selon l'une quelconque des revendications 1 à 10.

12. Procédé de polymérisation d'un 1-alcène ayant 2 à 8 atomes de carbone, avec ou sans petites quantités ne dépassant pas 15 moles % au maximum d'un ou plusieurs autres 1-alcènes de 2 à 15 atomes de carbone, de préférence l'éthylène, éventuellement avec un maximum de 10 moles % d'oléfines de 3 à 8 atomes de carbone, en présence d'un catalyseur qu'on obtient en appliquant un support minéral inerte, en particulier la silice, un complexe d'un composé de chrome avec un ou plusieurs composés organo-métalliques d'un métal du Groupe II ou III de la Classification Périodique dans lesquels des groupes hydrocarbyle de 1 à 20 atomes de carbone sont liés à ce métal, le procédé étant caractérisé en ce qu'on utilise un catalyseur selon la revendication 11.

13. Procédé selon la revendication 12, caractérisé en ce qu'on effectue la polymérisation également en présence d'un composé organométallique d'un métal du Groupe II or III de la Classification Périodique.

14. Procédé selon la revendication 13, caractérisé en ce qu'on utilise un trialkyl-bore comme composé organo-métallique.

## Patentansprüche

1. Verfahren zur Herstellung eines Chrom enthaltenden Katalysators für die Polymerisation von Olefinen durch Aufbringen eines Komplexes einer Chromverbindung mit einer oder mehreren Oroganometallverbindungen eines Metalls der Gruppe II oder III des Periodensystems, in welchen Hydrocarbylgruppen mit 1—20 Kohlenstoffatomen an dieses Metall gebunden sind, auf eine inerten, anorganischen Träger, insbesondere Siliciumdioxid, dadurch gekennziechnet, daß außer dem Chromkomplex auch eine Verbindung oder ein Komplex von Nickel, Molybdän und/oder Titan auf den inerten Träger aufgebracht wird/werden.

2. Verfahren nach Anspruch 1, dadurch gekennzeichnet, daß die Verbindung oder der Komplex von Nickel, Molybdän und/oder Titan auf dem inerten Träger zusammen mit dem Chromkomplex aus einer Lösung desselben abgelagert wird.

3. Verfahren nach Anspruch 1, dadurch gekennzeichnet, daß die Verbindung oder der Komplex von Nickel, Molybdän und/oder Titan auf den inerten träger gesondert, vor oder nach der Ablagerung des Chromkomplexes, aus einer Lösung dieser Verbindung oder dieses Komplexes abgelagert wird.

4. Verfahren nach den Ansprüchen 1—3, dadurch gekennzeichnet, daß ein Komplex einer Nickel-, Molybdän- und/oder Titanverbindung mit einer oder mehreren Organometallverbindungen eines Metalls der Gruppe II oder III des Periodensystems, in welchen Hydrocarbylgruppen mit 1—20 Kohlenstoffatomen an dieses Metall gebunden sind, verwendet wird.

5. Verfahren nach Anspruch 4, dadurch gekennzeichnet, daß die Nickel-, Molybdän- und/oder Titanverbindung mit 0,5—20 Mol Organometallverbindung eines Metalls der Gruppe II oder III des Periodensystems je Mol Nickel oder Molybdän ungesetzt wird/werden.

6. Verfahren nach den Ansprüchen 2 und 4, dadurch gekennzeichnet, daß die Chromverbindung und die Nickel-, Molybdän- und/oder Titanverbindung mit 0,5—20 Mol Organometallverbindung eines Metalls der Gruppe II oder III des Periodensystems je Mol Chrom+Nickel, Molybdän und/oder Titan umgesetzt werden.

7. Verfahren nach den Ansprüchen 1—3, dadurch gekennzeichnet, daß eine Nickel-, Molybdän- und/oder Titanverbindung verwendet wird/werden, welche in einem organischen Lösungsmittel löslich ist/sind, das gegenüber dem Träger inert ist.

8. Verfahren nach den Ansprüchen 1—7, dadurch gekennzeichnet, daß das molare Verhältnis des Chroms zu den anderen Übergangsmetallen 1:50 bis 50:1 beträgt.

9. Verfahren nach Anspruch 8, dadurch gekennzeichnet, daß das molare Verhältnis des Chroms zu den anderen Übergangsmetallen 1:10 bis 20:1 beträgt.

10. Verfahren nach den Ansprüchen 1—9, dadurch gekennzeichnet, daß die erhaltene Katalysatorkomponente auf eine Temperatur von 200—1200°C in einer nicht reduzierenden Atmosphäre erhitzt wird.

11. Katalysator, erhalten durch das Verfahren nach einem der Ansprüche 1—10.

12. Verfahren zur Polymerisation eines 1-Alkens mit 2—8 Kohlenstoffatomen, gegebenenfalls, zusammen mit kleineren Mengen von höchstens 15 Mol-% eines oder mehrerer anderer 1-Alkene mit 2—15 Kohlenstoffatomen, vorzugsweise Äthylen, gewünschtenfalls mit höchstens 10 Mol-% Olefinen mit 3—8 Kohlenstoffatomen, in Gegenwart eines Katalysators, erhalten durch Aufbringen eines Komplexes einer Chromverbindung mit einer oder mehreren Organometallverbindungen eines Metalls der Gruppe II oder III des Periodensystems, in welchen Hydrocarbylgruppen mit 1—20 Kohlenstoffatomen an dieses Metall gebunden sind, auf einen inerten anorganischen Träger, insbesondere Siliciumdioxid, welches Verfahren dadurch gekennzeichnet ist, daß ein gemäß einem der Ansprüche 1—10 erhaltener Katalysator verwendet wird.

13. Verfahren nach Anspruch 12, dadurch gekennzeichnet, daß die Polymerisation auch in Gegenwart einer Organometallverbindung eines Metalls der Gruppe II oder III des Periodensystems durchgeführt wird.

14. Verfahren nach Anspruch 13, dadurch gekennzeichnet, daß Trialkylbor als Organometallverbindung verwendet wird.